Europäisches Patentamt

European Patent Office

Office européen des brevets

(19)

(11) Publication number: **0 231 615 B1**

# EUROPEAN PATENT SPECIFICATION

(12)

(45) Date of publication of patent specification: **21.08.91**   (51) Int. Cl.⁵: **B01D 11/04**

(21) Application number: **86309472.8**

(22) Date of filing: **04.12.86**

(54) **High capacity reciprocating plate liquid-liquid extractor.**

(30) Priority: **13.12.85 US 808477**

(43) Date of publication of application:
**12.08.87 Bulletin 87/33**

(45) Publication of the grant of the patent:
**21.08.91 Bulletin 91/34**

(84) Designated Contracting States:
**BE DE FR GB IT NL**

(56) References cited:
**DE-A- 2 548 286**
**DE-C- 521 541**
**FR-A- 2 335 254**
**US-A- 2 850 362**
**US-A- 3 032 403**

(73) Proprietor: **EXXON RESEARCH AND ENGI-
NEERING COMPANY**
**P.O.Box 390, 180 Park Avenue**
**Florham Park, New Jersey 07932(US)**

(72) Inventor: **Fiocco, Robert John**
**77 Pine Grove Avenue**
**Summit New Jersey 07901(US)**

(74) Representative: **Somers, Harold Arnold et al**
**ESSO Engineering (Europe) Ltd. Patents &**
**Licences Mailpoint 72 Esso House Ermyn**
**Way**
**Leatherhead, Surrey KT22 8XE(GB)**

## Description

### BACKGROUND OF THE INVENTION

This invention relates to reciprocating plate extractors useful for liquid extraction processes. More particularly, it relates to improvements in reciprocating plate extractors whereby coalescing surfaces are located in the vicinity of the plate stacks in the extractor thereby enhancing the coalescence rate of emulsion droplets which otherwise limit the capacity of the extractor.

Solvent extraction processes are well established techniques in the petroleum, pharmaceutical and chemical industries. Indeed, various types of mechanical agitation have been used in liquid-liquid extractors in an attempt to improve the mass transfer efficiency of such extractors. For example, pulsating energy is one technique that has been employed for obtaining a high rate of mass transfer in a liquid-liquid extractor. More recently, reciprocating plate extractors have been employed to introduce mechanical agitation because of their energy efficiency.

As is known, the flow limiting phenomena in reciprocating extractors results from a build up of droplets, for example, the formation of an emulsion in certain zones between the plates in the extractor. These emulsion droplets eventually progress to the wrong end of the column and in such instances the extractor is said to be flooded. In general, to avoid flooding the mixing energy is reduced, for example, by altering the plate spacing or by altering the amplitude or frequency of plate motion. Unfortunately a reduction in mixing energy results in a reduction in efficiency of the extractor.

Therefore, there remains a need for reciprocating plate extractors which are less prone to flooding and which have greater flow capacity than is presently achieved with reciprocating plate extractors.

FR-A-2335254 and its U.S. counterpart, US-A-4057224 each describe and claim an apparatus for contacting a heavy-liquid phase with a light-liquid phase which comprises a vertical cylindrical vessel formed near its top with an inlet for said heavy-liquid phase and with an outlet for said light-liquid phase and near its bottom with an inlet for said light-liquid phase and with an outlet for said heavy-liquid phase, and which contains plates having perforations forming flow passages·for the light-liquid phase and perforations forming flow passages for the heavy-liquid phase and disposed above the perforations forming flow passages for the light-liquid phase, the superposed perforated portions forming mixing zones for mixing the two liquid phases occupying 10-30% of the cross-sectional area of the vessel, the plates being unperforated in an area which occupies 40-80% of the cross-sectional area of the container so that this area and an area which occupies 10-30% of the cross-sectional area of the container and through which liquid is withdrawn define a separating zone for the liquid phases, the improvement wherein said separating zone is filled with a material which accelerates coalescence.

In some embodiments, the perforated plates of the apparatus of FR-A-2335254 are conical, and stirrers or reciprocable members are disposed between the apices of conical perforated plates. The stirrers are rotatable about the axis of the vessel and the reciprocable members are reciprocable up and down along the axial direction of the vessel.

The apparatus of FR-A-2335254 is not a reciprocating plate extractor since the perforated plates separating adjacent extraction stages are fixed relative to the vessel. In a reciprocating plate extractor, the perforated plates separating adjacent extraction stages are reciprocable within the vessel.

The present invention provides a liquid-liquid extractor comprising a column having a plurality of perforated plates located therein and which are spaced apart lengthwise of the column, and a coalescence medium in said column for promoting coalescence of the components of emulsion which forms in the column during operation, characterised in that the plates are flat and horizontal and are movable in a reciprocating manner in a sense parallel to the axis of the column, means are operably connected for imparting reciprocating motion to the plates, and the coalescence medium is located around the periphery of a plurity of plates or the coalescence medium extends across the interior of the column between at least one pair of adjacent plates.

Simply stated, the present invention provides a reciprocating plate extractor column having a coalescence medium located at least in the zone within the column where emulsions would otherwise form. Preferably, the coalescence medium is one which will be wetted by the dispersed phase under conditions of use. More preferably, however, the coalescence medium will be a combination of two materials, one of which is wetted by the dispersed phase and one of which is wetted by the continuous phase.

In one embodiment of the present invention, the coalescence medium is located vertically around the periphery of at least a part of the plate stack.

In a second and alternate embodiment of the present invention, the coalescence medium is located horizontally at least between two plates within the stack.

### BRIEF DESCRIPTION OF THE DRAWINGS

Figure 1 is a side elevational view and section of a reciprocating plate extractor in accordance with one embodiment of the present invention.

Figure 2 is a sectional view partly in perspective showing in greater detail the vertical arrangement of the coalescence media around the periphery Of the plate stacks.

Figure 3 is a sectional side elevation showing another embodiment of an extractor of the present invention in which the coalescence medium is arranged vertically around the plate stacks in an enlarged section of the extractor.

Figure 4 is a fragmentary side elevation showing the horizontal arrangement of coalescence medium in accordance with another embodiment of the present invention.

## DETAILED DESCRIPTION OF THE INVENTION

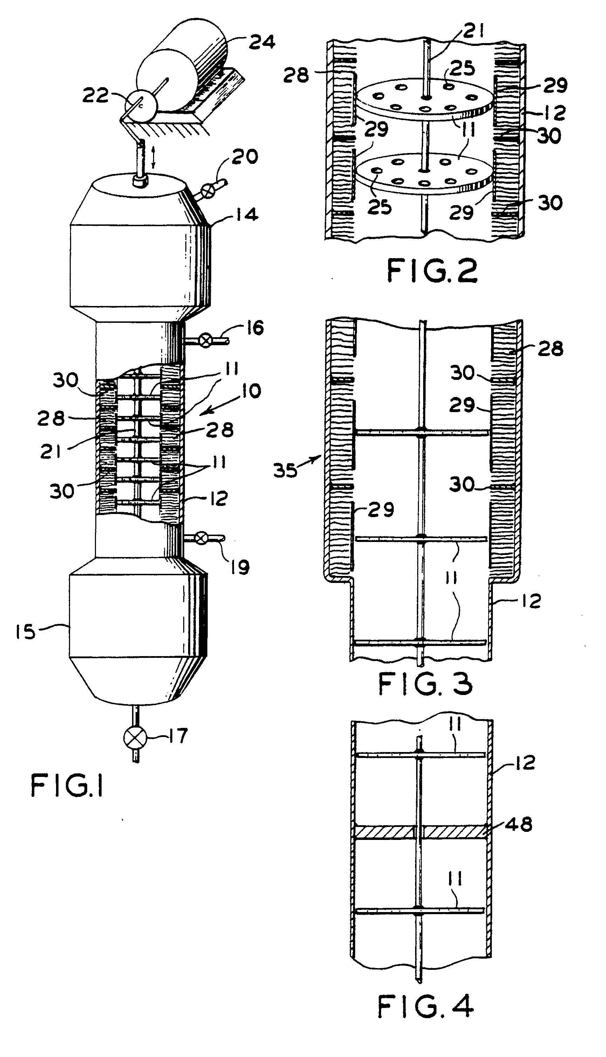

Referring now to Figure 1 of the drawings, reference numeral 10 designates an extractor which is provided with a plurality, or stack, of perforated plates 11 horizontally arranged within the vertical shell 12 of the column proper of extractor 10. Also as can be seen from Figure 1, extractor 10 includes an upper settling section 14 and a lower settling section 15. In the Figure 1 embodiment, the settling sections 14 and 15 are shown as having larger diameters than the diameter of the column proper; however, the diameter of the settling sections optionally may be the same as the diameter of the column proper.

The extractor 10 is provided with inlet means 16 and 19 for the introduction of a heavy and light phase, respectively, into the extractor for passage therethrough.

Upper settling section 14 is provided with outlet means 20 for removal of the light phase after its passage through the column proper of extractor 10. Similarly, the lower settling zone 15 contains an outlet means 17 for the removal of the heavy phase after its passage through the column proper of extractor 10.

The stack of perforated plates 11 situated within shell 12 of the column proper are fastened to a rod 21 which in turn is connected to an eccentric 22 driven by motor 24 that imparts a reciprocating motion to the stack of perforated plates. It is this reciprocating motion, imparted to the plates, that promotes and enhances intimate contact of the liquids flowing through the extractor.

As is known, the spacing of the plates in reciprocating plate extractors need not be uniform, as is shown for perforated plates 11 of the extractor 10 of Figure 1. Typically, in the extractor of the present invention, the spacing of perforated plates 11 will be increased in the zones prone to emulsion formation in contrast to zones less prone to emulsion formation. Also, in general, the spacing of perforated plates 11 will be in the range of from about 1 to about 12 inches (i.e., about 2.54 to about 30.48 cm).

Referring now to Figure 2, it can be seen that the plates 11 are provided with a plurality of relatively small apertures 25 through which the dispersed phase, and alternately, continuous phase flows.

Importantly in the practice of the present invention, coalescence medium is located, in the column proper of the extractor, at least in a zone which is emulsion prone. Optionally, of course, coalescence medium is provided throughout the column proper. As is shown in Figures 1 and 2, the coalescence medium 28 is arranged around the periphery of the stack of reciprocating plates 11. This coalescence medium may be selected from a wide range of materials, such as knitted wire mesh and other fibrous materials, such as screening and the like. In the practice of the present invention, it is particularly preferred that the coalescence medium 28 be a material which will be wetted by the dispersed or discontinuous phase. More preferably the coalescence medium is a combination of materials, i.e., one which is wetted by the light phase and one which is wetted by the heavy phase. Indeed, when the coalescence medium is a combination of materials, it is unimportant whether the dispersed phase is the light phase or the heavy phase. The coalescence medium 48, of course, will have sufficient void fraction so as not to inhibit the flow of the continuous phase through the extractor. For example, the coalescence medium will have greater than 90% void fraction, e.g., from about 90% to 99% and preferably greater than 98%. Thus, the coalescence medium causes little or no mixing energy-loss to the fluids.

In one particularly preferred embodiment of the present invention, the coalescence medium is maintained in place by retaining means, such as vertical rings 29 which may be solid or screen-like and, in addition to retaining the coalescence medium 28 around the periphery of the stack of horizontal plates 11, also serve to prevent rubbing of the plates 11 against the coalescence medium 28. Thus, it is preferred in effect that there be a ring 29 for each plate 11 located in a zone within the column proper having coalescence medium 28 also located therein.

The amount of the coalescence medium material that is employed in the extractor of the present invention is not critical. In general, however, the layer of coalescence medium material that is employed is relatively thin. Indeed, in columns having diameters of from about 3 feet (0.914 m) to about 6 feet (1.83 m), for example, the coalescence medium thickness when vertically arranged would be generally only of about 3 inches (7.62 cm) to about 12 inches (30.48 cm).

An important preferred feature of the present invention, as also shown in Figure 2, is the provision of anti-bypass means such as the horizontal disc or discs 30 which assist in directing the flow of liquid phases from the coalescence medium 28 back out into the agitation zone of the column and thereby prevent the emulsion from bypassing the agitation zone. The disc or discs 30, in general, will be located above and below and spaced apart from rings 29. The number of discs 30 employed is not critical and is a matter of design choice. Preferably, however, the number of discs 30 employed will correspond to the number of plates 11 that are located in the region of the column proper that contains coalescence medium 28.

In the embodiment shown in Figure 3, the extractor is provided with slightly enlarged diameter zone 35 which, of course, is located in an emulsion prone section of the extractor 10, for example, such as a section near an emulsion prone inlet.

Referring now to the embodiment as shown in Figure 4, the coalescence medium 48 is horizontally arranged between two reciprocating plates 11 of the extractor 10. Of course, a plurality of horizontally arranged coalescence medium layers such as 48 of Figure 4 can be located between other or all of the plates of the extractor. In general, however, the coalescence medium 48 is located only in the emulsion prone zone within extractor 10. Optionally the thickness of medium 48 can be varied over a wide range. Thus, it can constitute a single layer of relatively thin material up to filling the entire space between the extreme positions of adjacent plates 11.

Basically, the presence of the coalescence medium in the extractor of the present invention results in the delay of onset of flooding due to emulsion buildup with the concomitant result that higher flow rates can be achieved with the extractor.

It should be readily appreciated that the extractor of the present invention is particularly suitable for extraction processes such as lube oil production, aromatics recovery and alcohol extraction from sulfuric acid.

In this patent specification, 1 inch is taken to be 2.54 cm and 1 foot is taken to be 30.48 cm.

## Claims

1.  A liquid-liquid extractor (10) comprising a column (12) having a plurality of perforated plates (11) located therein and which are spaced apart lengthwise of the column, and a coalescence medium (28) in said column for promoting coalescence of the components of emulsion which forms in the column during operation, characterised in that the plates are flat and horizontal and are movable in a reciprocating manner in a sense parallel to the axis of the column, means (21,22,24) are operably connected for imparting reciprocating motion to the plates, and the coalescence medium (28) is located around the periphery of a plurality of plates or the coalescence medium (48) extends across the interior of the column between at least one pair of adjacent plates.

2.  The extractor of claim 1 comprising anti-bypass means (30) disposed in said zone containing coalescence medium which obstructs the flow of liquid phases through said coalescence medium (28) located around the periphery of the plurality of plates.

3.  The extractor of claim 2 wherein said anti-bypass means (30) is/are solid horizontally disposed ring(s) or disc(s).

4.  The extractor of any one of claims 1 to 3 comprising means (29) for retaining said coalescence medium in said extractor and preventing contact thereof with said plates.

5.  The extractor of claim 4 wherein said retaining means (29) are vertical rings.

6.  The extractor of claim 5 wherein said rings are selected from solid or foraminous rings.

## Revendications

1.  Extracteur liquide-liquide (10) comprenant une colonne (12) ayant une pluralité de plaques perforées (11) situées dans celle-ci et qui sont espacées les unes des autres dans le sens de la longueur de la colonne, et un milieu de coalescence (28) disposé dans ladite colonne pour provoquer la coalescence des composants d'une émulsion qui se forme dans la colonne pendant le fonctionnement, caractérisé en ce que les plaques sont plates et horizontales et sont déplaçables d'une manière alternative selon une direction de déplacement parallèle à l'axe de la colonne, en ce que des moyens (21, 22, 24) sont reliés de façon fonctionnelle pour communiquer le mouvement alternatif aux plaques, et en ce que le milieu de coalescence (28) est situé autour de la périphérie d'une pluralité de plaques ou bien le milieu de coalescence (48) s'étend en travers à l'intérieur de la colonne entre au moins une paire de plaques adjacentes.

2. Extracteur selon la revendication 1, comprenant un moyen d'anti-dérivation (30) disposé dans ladite zone contenant le milieu de coalescence, obstruant l'écoulement des éléments en phase liquide au travers dudit milieu de coalescence (28) situé autour de la périphérie de la pluralité de plaques.

3. Extracteur selon la revendication 2, dans lequel ledit moyen d'anti-dérivation (30) est composé d'un ou plusieurs anneaux ou disques pleins disposés horizontalement.

4. Extracteur selon l'une quelconque des revendications 1 à 3, comprenant un moyen (29) pour retenir ledit milieu de coalescence dans ledit extracteur et pour empêcher le contact de celui-ci avec lesdites plaques.

5. Extracteur selon la revendication 4, dans lequel ledit moyen de rétention (29) est composé d'anneaux verticaux.

6. Extracteur selon la revendication 5, dans lequel lesdits anneaux sont choisis parmi des anneaux pleins ou perforés.

**Patentansprüche**

1. Flüssig-Flüssig-Extraktor (10), der eine Kolonne (12), in der eine Vielzahl perforierter Platten (11) angeordnet ist, die in Längsrichtung der Kolonne voneinander beabstandet sind, und in der Kolonne ein Koaleszenzmedium (28) zur Förderung der Koaleszenz der Komponenten einer Emulsion, die sich beim Betrieb in der Kolonne bildet, umfaßt, **dadurch gekennzeichnet,** daß die Platten flach und horizontal sind und in einer hin- und herbewegenden Weise parallel zur Kolonnenachse beweglich sind, Mittel (21, 22, 24) betriebsfähig zur Vermittlung einer Hin- und Herbewegung mit den Platten verbunden sind und das Koaleszenzmedium (28) um die Peripherie einer Vielzahl von Platten herum angeordnet ist oder sich das Koaleszenzmedium (48) quer durch das Innere der Kolonne zwischen mindestens einem Paar benachbarter Platten erstreckt.

2. Extraktor nach Anspruch 1, der Anti-Bypass-Mittel (30) umfaßt, die in der das Koaleszenzmedium enthaltenden Zone angeordnet sind und das Fließen flüssiger Phasen durch das um die Peripherie der Vielzahl von Platten herum angeordnete Koaleszenzmedium (28) unterdrücken.

3. Extraktor nach Anspruch 2, bei dem die Anti-Bypass-Mittel (30) ein oder mehrere feste, horizontal angeordnete Ringe oder Scheiben sind.

4. Extraktor nach einem der Ansprüche 1 bis 3, der Mittel (29) zum Zurückhalten des Koaleszenzmediums in dem Extraktor und zum Verhindern des Kontakts des Koaleszenzmediums mit den Platten umfaßt.

5. Extraktor nach Anspruch 4, bei dem die Rückhaltemittel (29) vertikale Ringe sind.

6. Extraktor nach Anspruch 5, bei dem die Ringe ausgewählt sind aus festen oder porösen Ringen.

FIG.1

FIG.2

FIG. 3

FIG.4